# EUROPEAN PATENT SPECIFICATION

(11) **EP 0 739 951 B1**
(45) Date of publication and mention of the grant of the patent: **20.06.2001**
(21) Application number: 96302991.3
(22) Date of filing: 29.04.1996
(51) Int. Cl.: C09B 67/12, C09B 47/06, C09B 67/22

(54) **Process for the production of phthalocyanine pigment**
Verfahren zur Herstellung eines Phthalocyaninpigments
Procédé de fabrication d'un pigment de phtalocyanine

(30) Priority: 28.04.1995 JP 10522395
(43) Date of publication of application: 30.10.1996
(73) Proprietor: TOYO INK MANUFACTURING CO., LTD., Tokyo (JP)
(72) Inventor: Noguchi, Hideto, c/o Tokyo Ink Manufact. Co., Ltd., Chuo-ku, Tokyo (JP); Hayashi, Mikio, c/o Tokyo Ink Manufact. Co., Ltd., Chuo-ku, Tokyo (JP); Momose, Masatoshi, c/o Tokyo Ink Manufact Co, Ltd, Chuo-ku, Tokyo (JP)
(74) Representative: Woods, Geoffrey Corlett

(56) References cited:
- EP-A- 0 571 776
- EP-A- 0 574 790
- FR-A- 1 280 422
- US-A- 3 280 142
- PATENT ABSTRACTS OF JAPAN vol. 017, no. 492 (C-1107), 7 September 1993 & JP-A-05 125289 (TOYO INK MFG CO LTD), 21 May 1993,
- DATABASE WPI Week 7422 Derwent Publications Ltd., London, GB; AN 74-40536v XP002011777 & JP-A-48 038 332 (DAINICHISEIKA COLOR AND CHEMICAL MFG CO.) , 6 June 1973
- CHEMICAL ABSTRACTS, vol. 94, no. 12, 23 March 1981 Columbus, Ohio, US; abstract no. 85671h, XP002011776 & JP-A-80 139 457 (KAWASAKI KASEI CHEMICALS LTD.) 31 October 1980

## Description

The present invention relates to a process for the production of phthalocyanine pigments which are industrially used in large quantities owing to excellence in various properties such as weathering resistance, heat resistance and chemical resistance, excellent clearness in color and high tinting strength as compared with other organic pigments.

A copper phthalocyanine pigment is the most typical among phthalocyanine pigments, and a copper phthalocyanine pigment will be taken up as an example to discuss the prior art of the invention hereinafter. Among organic pigments, a copper phthalocyanine pigment is excellent in various properties such as weathering resistance, heat resistance and chemical resistance and in clearness in color and has high tinting strength, and it is therefore widely used in large quantities in the fields of coloring material industry.

Generally, a copper phthalocyanine crude is produced by a method in which phthalic anhydride or its derivative, urea or its derivative and copper or a copper compound are allowed to react in the presence of a catalyst in an organic solvent such as alkylbenzene, trichlorobenzene or nitrobenzene under atmospheric pressure or elevated pressure at a temperature between 150°C and 250°C, preferably between 170°C and 220°C, for 2 to 15 hours, preferably 3 to 7 hours. However, synthesized phthalocyanine molecules consecutively undergo crystal growth in the solvent to form a coarse acicular crystal having a major diameter of approximately 10 to 20 µm. The so-formed copper phthalocyanine crude has a small value, or no value, as a colorant pigment for an ink, a coating composition and plastics.

It is therefore required to convert the copper phthalocyanine crude into highly valuable particles in view of color, i.e., a finely milled structure having a diameter of approximately 0.01 to 0.05 µm (the procedure of forming a finely milled structure will be referred to as "pigmentation" hereinafter). Various methods for the above pigmentation have been hitherto proposed, such as a chemical method in which a copper phthalocyanine crude is dissolved in, or wetted by, an acid such as concentrated sulfuric acid and then mixture is poured into a large amount of water to re-precipitate a copper phthalocyanine (acid paste or acid slurry method) and a physical method in which a copper phthalocyanine crude is mechanically milled with a ball mill or a kneader.

However, the method in which a copper phthalocyanine crude is first synthesized and then formed into a pigment has various problems as follows.
1) The production step is lengthy, and uneconomically the cost of equipment is large.
2) The pigmentation step by a chemical method has problems in that the treatment with sulfuric acid corrodes equipment and that waste acid should be disposed of. The latter is also a big problem in view of environmental protection.
3) The main problems of the pigmentation step by a physical method are that the mechanical milling requires a large amount of power (energy), that the treatment time is long or the productivity is low, that the recovery of milling aids such as sodium chloride requires a large additional cost, and that it is required to treat high-COD waste water.
4) A copper phthalocyanine crude is synthesized in the presence of a lipophilic solvent on one hand, and the pigmentation step uses water or a hydrophilic solvent on the other hand. Therefore, the solvent removal and/or recovery are carried out in each step, which is uneconomical.
5) Generally, a copper phthalocyanine crude in the form of powder, which is obtained by removing the solvent from a slurry of a synthesized copper phthalocyanine crude, purifying the crude and drying the crude, is formed into a pigment. Then, the formed pigment is again purified and dried. The purification steps and the drying steps are carried out twice each, which is poor in economic performance.

For overcoming the above problems, there have been hitherto proposed various one-stage synthesis methods in which the synthesis (reaction) and the pigmentation are concurrently carried out, such as a method ① in which the reaction is carried out under high milling strength (JP-B-45-7662, JP-A-48-38332), a method ② in which the reaction is carried out in the presence of a crystal growth inhibitor (JP-B-52-19216, JP-A-61-203175, JP-A-63-207858), and a method ③ in which phthalic anhydride and urea are allowed to react in a mixed solvent containing an aromatic solvent having a high boiling point and a paraffin-containing or naphthene-containing hydrocarbon solvent and then copper or a copper salt is added to the reaction mixture to constitute the central metal of phthalocyanine.

However, the above methods carry out the synthesis and the pigmentation in one apparatus, and therefore have the following problems. The method ① requires a reactor which can withstand high milling strength, and the quality of the pigment obtained in the methods ② and ③ is inferior to that of the pigment obtained by the conventional two-step method in which the synthesis step and the pigmentation step are separately carried out.

EP-A-571776 discloses a process in which a metal compound reacts with a phthalocyanine derivative during a grinding step. No phthalocyanine dispersant is added. US-A-5296033 discloses a process in which conventional crude phthalocyanine is milled and subjected to a finishing treatment, in the presence of a pigment dispersing agent.

It is an object of the present invention to provide a process for the production of a phthalocyanine pigment having a clear colour tone, a high tinting strength and a finely milled structure by an efficient and economical process.

It is another object of the present invention to provide a process for the production of a phthalocyanine pigment in which the productivity is improved and it is sufficient to carry out the purification step and the drying step once each, which steps are carried out twice each in a conventional method, i.e., after the synthesis of a phthalocyanine crude and after the pigmentation.

It is further another object of the present invention to provide a process for the production of a phthalocyanine pigment in which the pigmentation from a phthalocyanine crude can be carried out without removing an organic solvent used in the synthesis of the phthalocyanine crude.

According to the present invention, there is provided a process for the production of a phthalocyanine pigment, which process comprises:
(a) reacting phthalic anhydride or a derivative thereof with urea or a derivative thereof in an organic solvent in the presence of a catalyst to produce a phthalocyanine crude;
(b) wet-milling a slurry of the phthalocyanine crude, without removing the organic solvent, in the presence of a particulate milling medium having a diameter of 0.2 to lmm, and
(c) removing the organic solvent, purifying and drying the milled product,
wherein any one of the phthalocyanine derivatives of the following general formulae (1) to (3) is added after step (a) but before step (b) or during step (b):

MePc (SO₃⁻⁺NR¹R²R³R⁴)ₙ (1)

wherein MePc is a metal-free or metal-containing phthalocyanine residue which is unsubstituted or substituted with halogen, each of R¹, R², R³ and R⁴ is independently a hydrogen atom, an alkyl group, a substituted alkyl group, an aryl group, a substituted aryl group or a polyoxyalkylene group and n is an integer of from 1 to 4;

MePc[X-Y-Z-N(R⁵)R⁶]ₖ (2)

wherein MePc is as defined above, X is a direct bond or a divalent binding group of a chemically rational combination consisting of 2 to 15 atoms selected from S, C, N, O and H atoms, Y is a direct bond, a -N(R⁷)- in which R⁷ is an alkyl group having 1 to 18 carbon atoms or Z-N(R⁵)R⁶, or -O-, Z is an alkylene group having 1 to 6 carbon atoms, each of R⁵ and R⁶ is independently an alkyl group having 1 to 18 carbon atoms or a substituted alkyl group having 1 to 18 carbon atoms, or R⁵ and R⁶ together with the nitrogen atom to which they are attached form a heterocyclic ring which optionally contains O, S or an additional N and is substituted or unsubstituted, and k is an integer of from 1 to 3; and 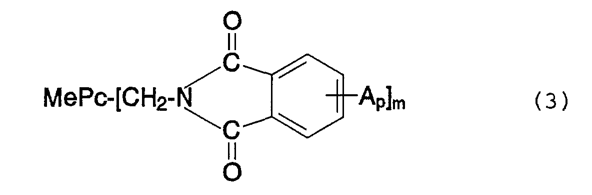 wherein MePc is as defined above, A is a halogen atom or a nitro, amino, sulfone, carboxyl or alkyl group, p is 0 or an integer of 1 to 4 and m is an integer of 1 to 4.

Examples of the phthalic anhydride or the derivative thereof, used in the present invention, include phthalic acid, salts or esters thereof; phthalic anhydride, phthalimide, phthalamic acid and salts or esters of these; and phthalonitrile. The phthalic anhydride or the derivative thereof may contain chlorine, bromine, alkyl, phenyl, a sulfone group or carboxyl on its benzene ring.

Examples of the urea or the derivative thereof, used in the present invention, include biuret and ammonia. The amount of the urea or the derivative thereof per 4 mol of the phthalic anhydride or the derivative thereof is typically approximately 4 to 40 mol.

Examples of the catalyst used in the present invention include molybdenum compounds such as ammonium molybdate, molybdenum oxide and phosphormolybdic acid, titanium compounds such as titanium tetrachloride and titanate ester, zirconium compounds such as zirconium oxide and zirconium carbonate, antimony oxide, arsenic oxide and boric acid.

Examples of the organic solvent used in the present invention include aromatic hydrocarbons such as alkylbenzene, alkylnaphthalene and tetralin, alicyclic hydrocarbons such as alkylcyclohexane, decalin and alkyldecalin; aliphatic hydrocarbons such as decane and dodecane; nitrobenzene, o-nitrotoluene, tirfluorobenzene, dichlorobenzene, chloronaphthalene, methylnaphthalene, sulfolane, dimethylsulfoxide, methylsulfolane, dimethylsulfolane, N-methylpyrrolidone, dimethylimidazolidinone, dimethylformamide and trichlorobenzene. Of these organic solvents, aromatic hydrocarbons such as alkylbenzene, alkylnaphthalene and tetralin give the most favorable result as a solvent for the synthesis of phthalocyanine. The organic solvent used in the present invention is therefore typically an aromatic hydrocarbon. The organic solvent used in the step (a) is typically 0.5 to 2 times as large as the weight of a phthalocyanine to be synthesized. Step (b) may be carried out in the presence of an additional organic solvent. The additional organic solvent is preferably the same as the organic solvent used in the step (a) since it is industrially advantageous in view of the removal and recovery of the organic solvent.

The temperature employed for the synthesis of a phthalocyanine crude is preferably 150°C to 250°C.

Although no specially limited, the pressure employed for the synthesis of a phthalocyanine crude is preferably an elevated pressure. An elevated pressure serves to prevent the pyrolysis of urea and its derivative and to inhibit a side reaction so that the end product is improved in quality.

In the present invention, further, step (a) may be carried out in the presence of a metal which can constitute a central metal of the resulting phthalocyanine or in the presence of a compound of a said metal. Examples of the above metal or metal compound include metals such as copper, titanium, vanadium, chromium, manganese, cobalt, iron, nickel and zinc, and halides, hydroxides, oxides, cyanides, phosphates, sulfides, nitrates, sulfates, acetates and carbonates of these metals. The amount of the above metal or metal compound per 4 mol of the phthalic anhydride or its derivative is typically approximately 0.8 to 1.3 mol.

The above metal which can constitute the central metal can be selected from various metals and metal compounds as described above, while copper phthalocyanine of which the central metal is copper is clear in color and the most widely industrially used.

In the present invention, one of the phthalocyanine derivatives of the said general formulae (1) to (3) is added after step (a) but before step (b) or during step (b). When the phthalocyanine derivative is added, the phthalocyanine pigment as an end product is clear in color and has a high tinting strength as compared with a phthalocyanine pigment obtained without the above phthalocyanine derivative. It is assumed that the phthalocyanine derivative has a particles-controlling effect that it inhibits the growth of particles at the synthesis time or wet-milling time.

The compound of the general formula (1) can be obtained by reacting phthalocyaninesulfonic acid with an amine component. The amine component is not specially limited, and can be selected from primary amines, secondary amines, tertiary amines and quaternary ammonium salts. These amines and ammonium salts are disclosed, for example, in Japanese Patent Publications Nos. 39-28884 and 40-4143, JP-A-52-33922, JP-A-57-12067 and JP-A-3-33166. Specific examples of the amine component are as follows. Examples of the primary amines include amines such as hexylamine, heptylamine, octylamine, nonylamine, decylamine, undecylamine, dodecylamine, tridecylamine, tetradecylamine, pentadecylamine, hexadecylamine, heptadecylamine, octadecylamine, nonadecylamine and eicosylamine, and unsaturated amines having carbon atoms equivalent to the number of carbon atoms of the above amines. These amines may have a branch. The secondary and tertiary and the quaternary ammonium salts are formed of an alkyl or aryl group constituting the above primary amine and at least one of methyl, ethyl, propyl, butyl, pentyl or the like.

Examples of the secondary and tertiary amines and the quaternary ammonium salts include dioleylamine, distearylamine, dimethyloctylamine, dimethyldecylamine, dimethyllaurylamine, dimethylstearylamine, dilaurylmonomethylamine, trioctylamine, dimethyldidodecylammonium chloride, dimethyldioleylammonium chloride, dimethyldidecylammonium chloride, dimethyldioctylammonium chloride, trimethylstearylammonium chloride, dimethyldistearylammonium chloride, trimethyldodecylammonium chloride, triemthylhexadecylammonium chloride, trimethyloctadecylammonium chloride, dimethyldodecylammonium chloride, and dimethylhexadecyloctadecylammonium chloride.

Further, the compound of the general formula (1) in which one or some of R¹, R², R³ and R⁴ is/are alkyl group, substituted alkyl group, aryl group or substituted aryl group, can be obtained by reacting phthalocyaninesulfonic acid with an amine component which may contain a substituent. The substituent may form a heterocyclic ring. The substituent includes a primary amino group, a secondary amino group, a tertiary amino group, halogen, hydroxyl, carbonyl, carboxyl, ether, ester and acyl. Examples of the amine component containing an amino group as a substituent include diamine, triamine, tetramine, pentamine and hexamine.

When one or some of R¹, R², R³ and R⁴ is/are polyoxyalkylene group, examples of the polyoxyalkylene group include polyoxyethylene and polyoxypropylene.

The method of preparing the compound of the general formula (1) used in the present invention is not specially limited. Generally, it can be prepared by a method in which a phthalocyanine pigment is sulfonated by a conventional method and then reacted with an amine in the presence or absence of water or an organic solvent.

Specific examples of the phthalocyanine derivative of the general formula (1) are as follows.

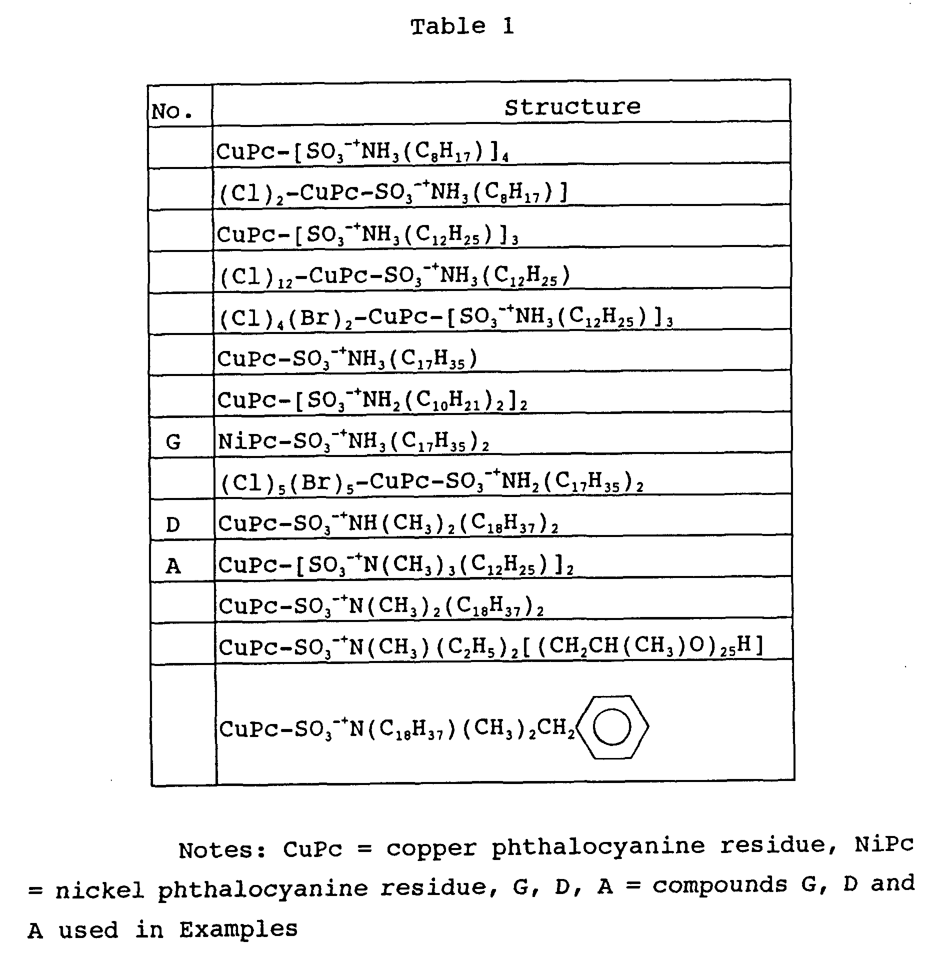

In the general formula (2), X is a direct bond or a divalent binding group of a chemically rational combination consisting of 2 to 15 atoms selected from S, C, N, O and H atoms. Examples of the binding group include -SO₂-, -CO-, -CH₂-, -O-, -COO-, -NH- and combinations of these. The binding group is preferably -SO₂-, -CO-, -CH₂- or -CH₂NHCOCH₂-. When each of R⁵ and R⁶ in the general formula (2) is independently an alkyl group, the alkyl group preferably includes lower alkyl groups such as methyl, ethyl, propyl and butyl. The alkyl group may have up to 18 carbon atoms, and the alkyl group having up to 18 carbon atoms may be branched. The alkyl group may have a substituent so long as the number of carbon atoms does not exceed 18. Further, R⁵ and R⁶ may be combined while forming a five-membered or six-membered ring containing N, O or S.

Specific examples of the phthalocyanine derivative of the general formula (2) are as follows.

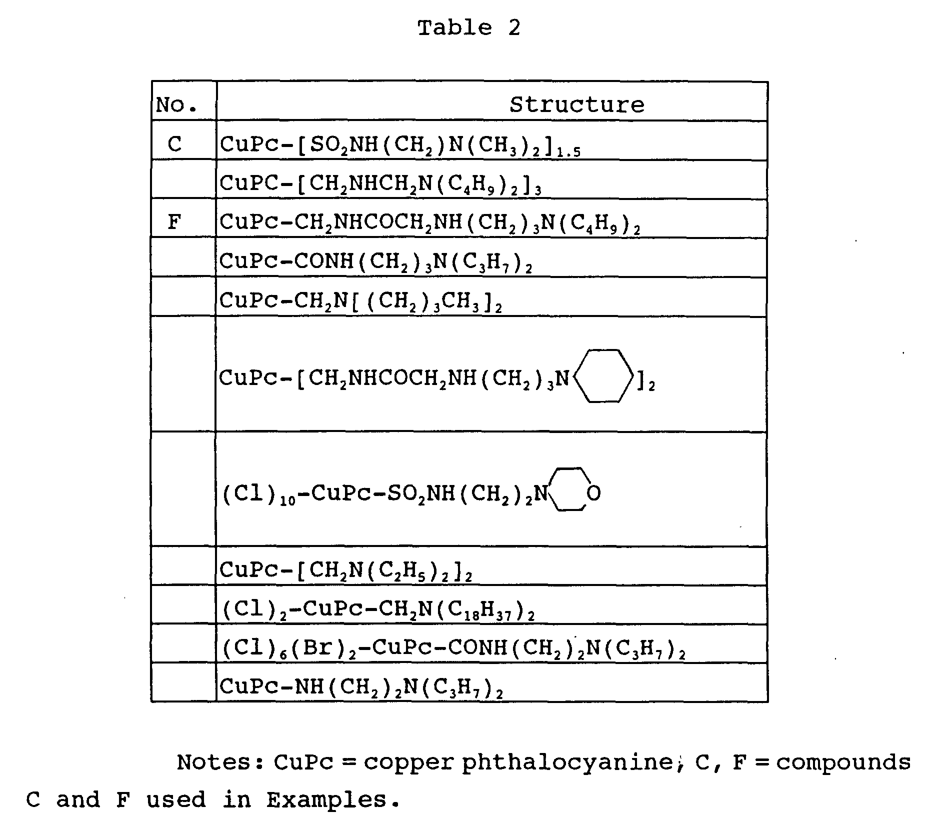

The compound of the general formula (3) in the present invention may be a compound in which halogen atom, nitro group, amino group, sulfo group, carboxyl group or alkyl group is substituted on any position on the benzene ring of the phthalimide methyl group.

Specific examples of the phthalocyanine derivative of the general formula (3) are as follows.

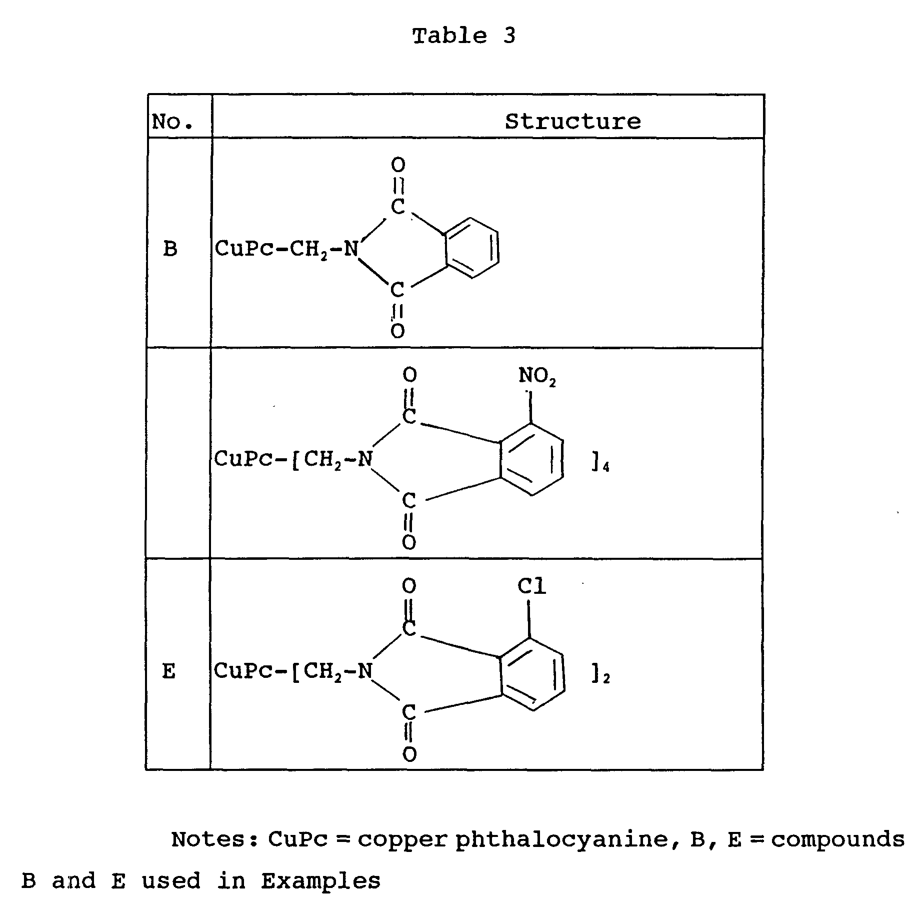

The phthalocyanine derivative of any one of the general formula (1), (2) or (3) may be added in a powder state or as a solution or dispersion in an organic solvent. It may be added after the synthesis of the phthalocyanine crude in the step (a) (then the mixture is stirred) or when the synthesized phthalocyanine crude is wet-milled in the step (b). In any case, the phthalocyanine derivative is adsorbed on the pigment surface by the stirring or during the wet-milling. The phthalocyanine derivative remains as a component of the pigment (pigment composition).

The phthalocyanine derivative of formula (1), (2) or (3) is typically added in an amount of from 0.1 to 10 parts by weight per 100 parts by weight of the phthalocyanine crude.

In the process of the present invention, step (b) may be carried out with a vibration mill, an attritor, or a sand mill such as a horizontal sand mill or a vertical sand mill.

The milling medium used in the present invention is typically selected from metal beads, glass beads and ceramic beads. Zircoia beads are the most preferred in view of wear resistance and crush resistance.

In the present invention, the crushing strength and milling strength of the milling medium increase with a decrease in the diameter thereof. However, a milling medium having a small diameter is disadvantageous in view of separating the milling medium from the slurry after the wet-milling. The diameter of the milling medium is 0.2 to 1 mm, preferably 0.2 to 0.6 mm.

The wet-milling in the present invention utilizes the crushing strength and milling strength caused by collision of the fine beads in the presence of the organic solvent. For obtaining a pigment having an excellent product quality, the total weight of the organic solvent in step (b) is preferably 2 to 20 times, particularly preferably 4 to 12 times, the weight of the phthalocyanine crude. When the amount of the organic solvent is greater than the above upper limit, the slurry has too low a viscosity. When the amount of the organic solvent is smaller than the above lower limit, the slurry has too high a viscosity. In these cases, undesirably, the milling efficiency is low.

When the fine milling medium having a diameter of 0.2 to 1 mm, or 0.2 to 0.6 mm, is used for the wet-milling from the beginning, coarse particles of phthalocyanine crude may remain in some cases. It is therefore preferred to use a milling medium having a diameter of more than 1 mm, preferably more than 1 mm to 3 mm, for preliminarily milling the coarse particles before the phthalocyanine crude is wet-milled in the presence of the milling medium having a diameter of 0.2 to 1 mm, preferably 0.2 to 0.6 mm. The period of time required for the above preliminary milling is preferably 10 to 50% of the whole milling time. Typically, therefore, step (b) is carried out by first milling the phthalocyanine crude in the presence of a particulate milling medium having a diameter of over 1 mm and then milling the phthalocyanine crude in the presence of a particulate milling medium having a diameter of 0.2 to 1 mm.

In the present invention, the temperature at the wet-milling time is essential. When the temperature is too high, the phthalocyanine pigment particles undergo crystal growth. When the temperature is too low, they undergo crystal transition. Preferably therefore, step (b) is carried out at a temperature of from 50°C to 90°C.

After the wet-milling, the organic solvent may be removed and recovered by a method in which the organic solvent is replaced with a hydrophilic solvent such as methanol, and then the phthalocyanine pigment is washed with water and purified. However, this method is disadvantageous since a large amount of the hydrophilic solvent is required if the above method is industrially carried out. Alternatively, the organic solvent can be removed and recovered by a method using a spray type dryer, and the phthalocyanine pigment obtained by this method has a product quality equivalent to that of the phthalocyanine pigment obtained by the above method in which the organic solvent is replaced with the hydrophilic solvent. The reason therefor is assumed to be as follows. The method using the spray type dryer is a method in which the phthalocyanine pigment forms fine cores (particles) when dried. The heat application at the time of solvent removal is instantaneous. Further, when the above phthalocyanine derivative is used in combination, the crystal growth is further prevented. Preferably, therefore, the organic solvent is removed with a spray type dryer.

The fine copper phthalocyanine pigment obtained in the present invention can be used for producing a coating composition, an ink or a colorant for a plastic by dispersing it in a medium such as a resin, a varnish or a plastic. Thus, the present invention also provides a process for producing a coating composition, ink or colorant, which process comprises preparing a phthalocyanine pigment by a process of the invention and formulating a coating composition, ink or colorant which incorporates the resulting phthalocyanine pigment.

### Examples

The present invention will be explained more in detail with reference to Examples and Comparative Examples hereinafter, while the present invention shall not be limited thereto. In Examples and Comparative Examples, "part" stands for "part by weight", and "%" stands for "% by weight".

Compound Nos. shown in Examples are the same as those shown in Tables 1 to 3.

### Comparative Example 1

A 1-liter autoclave was charged with 100 parts of phthalic anhydride, 145 parts of urea, 0.5 part of ammonium molybdate, 17 parts of copper chloride (I) and 200 parts of Hisol P (alkylbenzene, supplied by Nippon Petrochemical Co., Ltd.), and the mixture was heated up to 200°C under an elevated pressure of 1.5~3.0 kg/cm²G and allowed to react to give a slurry of a copper phthalocyanine crude. Then, the slurry was allowed to cool, and then, 17 parts of the slurry of phthalocyanine crude was charged into a vertical sand mill packed with 400 parts of zirconia beads having a diameter of 0.5 mm. Then, 32 parts of additional Hisol P was added, and the phthalocyanine crude was milled at 80°C for 2 hours. The resultant milled product and the milling medium were separated through two filters while washing them with methanol. The resultant cake was added to 300 parts of a 1 % sodium hydroxide aqueous solution, and the mixture was heated at 80°C for 30 minutes. Then, the mixture was filtered while fully washing the product with hot water until the pH of the filtrate became neutral. Further, the product was added to 300 parts of a 2% sulfuric acid aqueous solution, and the mixture was stirred under heat at 80°C for 30 minutes. The mixture was filtered while fully washing the product with hot water until the pH of the filtrate became neutral. Then, the product was dried to give a β-form copper phthalocyanine pigment. The so-obtained pigment was measured and evaluated for a specific surface area, a tinting strength and a color tone. Table 4 shows the results together with the results of measurement and evaluation of products obtained in Examples and Comparative Example to be described later.

The above-obtained copper phthalocyanine pigment was measured for a tinting strength as follows.

An oil ink was prepared from 2 parts of a copper phthalocyanine pigment sample, 8 parts of a rosin-modified resin and 250 parts of a white varnish with hoober Mullor, and the oil ink was measured for a color tone and a tinting strength with a color machine. The tinting strength data in Table 1 are data obtained by relative evaluation when the tinting strength of the copper phthalocyanine pigment obtained in Comparative Example 1 was taken as 100.

### Comparative Example 2

Without wet-milling, the same copper phthalocyanine crude as that obtained in Comparative Example 1 was directly filtered to remove Hisol P while washing it with methanol. The resultant cake was added to 300 parts of a 1 % sodium hydroxide aqueous solution, and the mixture was stirred under heat at 80°C for 30 minutes. The mixture was filtered while fully washing it with hot water until the pH of the filtrate became neutral, and the resultant residue was 300 parts of a 2 % sulfuric acid aqueous solution. The mixture was stirred under heat at 80°C for 30 minutes and then filtered while fully washing it until the pH of the filtrate became neutral, and then resultant residue was dried.

### Comparative Example 3

A copper phthalocyanine pigment was obtained in the same manner as in Comparative Example 1 except that the vertical sand mill was replaced with a horizontal sand mill. The copper phthalocyanine pigment had a high tinting strength.

### Comparative Example 4

A copper phthalocyanine pigment was obtained in the same manner as in Comparative Example 1 except that the copper phthalocyanine crude was wet-milled in the presence of 400 parts of zirconia beads having a diameter of 1.2 mm for 30 minutes in advance and then wet-milled in the presence of 400 parts of zirconia beads having a diameter of 0.3 mm for 1.5 hours in place of the wet-milling in the presence of 400 parts of zirconia beads having a diameter of 0.5 mm. The so-obtained copper phthalocyanine pigment was clearer in color than the pigment obtained in Comparative Example 1.

### Example 1

A 1-liter autoclave was charged with 100 parts of phthalic anhydride, 145 parts of urea, 0.5 part of ammonium molybdate, 17 parts of copper chloride (I) and 170 parts of Hisol P (alkylbenzene, supplied by Nippon Petrochemical Co., Ltd.), and the mixture was heated up to 200°C under an elevated pressure of 1.5 ~ 3.0 kg/cm²G and allowed to react to give a slurry of a copper phthalocyanine crude. Then, the slurry was allowed to cool, and then, the compound A (shown in Table 1) was added to 17 parts of the slurry of copper phthalocyanine crude. The amount of the compound A was 4 % based on the copper phthalocyanine crude. The mixture was charged into a vertical sand mill packed with 400 parts of zirconia beads having a diameter of 0.5 mm. Then, 32 parts of additional Hisol P was added, and the phthalocyanine crude was milled at 80°C for 2 hours. The resultant milled product and the milling medium were separated through two filters while washing them with methanol. The resultant cake was added to 300 parts of a 1 % sodium hydroxide aqueous solution, and the mixture was heated at 80°C for 30 minutes. Then, the mixture was filtered while fully washing the product with hot water until the pH of the filtrate became neutral. Further, the product was added to 300 parts of a 2% sulfuric acid aqueous solution, and the mixture was stirred under heat at 80°C for 30 minutes. The mixture was filtered while fully washing the product with hot water until the pH of the filtrate became neutral. Then, the product was dried to give a copper phthalocyanine pigment. The so-obtained pigment had a clearer color and a higher tinting strength than the pigment obtained in Comparative Example 1.

### Example 2

A copper phthalocyanine pigment was obtained in the same manner as in Example 1 except that the compound A was replaced with the compound B (shown in Table 3). The so-obtained pigment had a clearer color and a higher tinting strength than the pigment obtained in Comparative Example 1.

### Example 3

A copper phthalocyanine pigment was obtained in the same manner as in Example 1 except that the compound A was replaced with the compound C (shown in Table 2). The so-obtained pigment had a clearer color and a higher tinting strength than the pigment obtained in Comparative Example 1.

### Comparative Example 5

A 1-liter autoclave was charged with 100 parts of phthalic anhydride, 145 parts of urea, 0.5 part of ammonium molybdate, 17 parts of copper chloride (I) and 170 parts of Hisol P (alkylbenzene, supplied by Nippon Petrochemical Co., Ltd.), and the mixture was heated up to 200°C under an elevated pressure of 1.5 ~ 3.0 kg/cm²G and allowed to react to give a slurry of a phthalocyanine crude. Then, the slurry was allowed to cool, and then, 17 parts of the slurry of phthalocyanine crude was charged into a vertical sand mill packed with 400 parts of zirconia beads having a diameter of 0.5 mm. Then, 32 parts of additional Hisol P was added, and the phthalocyanine crude was milled at 80°C for 2 hours. The solvent was removed from the resultant milled product with a spray type dryer. The resultant dry product was added to 300 parts of a 1 % sodium hydroxide aqueous solution, and the mixture was heated at 80°C for 30 minutes. Then, the mixture was filtered while fully washing the product with hot water until the pH of the filtrate became neutral. Further, the product was added to 300 parts of a 2% sulfuric acid aqueous solution, and the mixture was stirred under heat at 80°C for 30 minutes. The mixture was filtered while fully washing the product with hot water until the pH of the filtrate became neutral. Then, the product was dried to give a β-form copper phthalocyanine pigment. The so-obtained copper phthalocyanine pigment had a clear color and a high tinting stregnth.

### Example 4

A copper phthalocyanine pigment was obtained in the same manner as in Comparative Example 5 except that the compound D (shown in Table 1) was added to 17 parts of the slurry of the synthesized copper phthalocyanine crude. The so-obtained copper phthalocyanine pigment had a clear color and a high tinting stregnth.

### Example 5

A copper phthalocyanine pigment was obtained in the same manner as in Comparative Example 5 except that the compound E (shown in Table 3) was added to 17 parts of the slurry of the synthesized copper phthalocyanine crude. The so-obtained copper phthalocyanine pigment had a clear color and a high tinting stregnth.

### Example 6

A copper phthalocyanine pigment was obtained in the same manner as in Comparative Example 5 except that the compound F (shown in Table 2) was added to 17 parts of the slurry of the synthesized copper phthalocyanine crude. The so-obtained copper phthalocyanine pigment had a clear color and a high tinting stregnth.

### Comparative Example 6

A 1-liter autoclave was charged with 100 parts of phthalic anhydride, 145 parts of urea, 0.5 part of ammonium molybdate, 22 parts of nickel chloride and 200 parts of Hisol P (alkylbenzene, supplied by Nippon Petrochemical Co., Ltd.), and the mixture was heated up to 200°C under an elevated pressure of 1.5 ~ 3.0 kg/cm²G and allowed to react to give a slurry of a nickel phthalocyanine crude. Then, the slurry was allowed to cool, and then, 17 parts of the slurry of nickel phthalocyanine crude was charged into a vertical sand mill packed with 400 parts of zirconia beads having a diameter of 0.5 mm. Then, 32 parts of additional Hisol P was added, and the phthalocyanine crude was milled at 80°C for 2 hours. The resultant milled product and the milling medium were separated through two filters while washing them with methanol. The resultant cake was added to 300 parts of a 1 % sodium hydroxide aqueous solution, and the mixture was heated at 80°C for 30 minutes. Then, the mixture was filtered while fully washing the product with hot water until the pH of the filtrate became neutral. Further, the product was added to 300 parts of a 2% sulfuric acid aqueous solution, and the mixture was stirred under heat at 80°C for 30 minutes. The mixture was filtered while fully washing the product with hot water until the pH of the filtrate became neutral. Then, the product was dried to give a nickel phthalocyanine pigment. The so-obtained pigment was measured and evaluated for a specific surface area, a tinting strength and a color tone. Table 4 shows the results together with the results of measurement and evaluation of products obtained in Examples and Comparative Example to be described later.

The above-obtained nickel phthalocyanine pigment was measured for a tinting strength in the same manner as in Comparative Example 1. The tinting strength data in Table 5 are data obtained by relative evaluation when the tinting strength of the nickel phthalocyanine pigment obtained in Comparative Example 6 was taken as 100.

### Comparative Example 7

Without wet-milling, the same nickel phthalocyanine crude as that obtained in Comparative Example 6 was directly filtered to remove Hisol P while washing it with methanol. The resultant cake was added to 300 parts of a 1 % sodium hydroxide aqueous solution, and the mixture was stirred under heat at 80°C for 30 minutes. The mixture was filtered while fully washing it with hot water until the pH of the filtrate became neutral, and the resultant residue was 300 parts of a 2 % sulfuric acid aqueous solution. The mixture was stirred under heat at 80°C for 30 minutes and then filtered while fully washing it until the pH of the filtrate became neutral, and then resultant residue was dried.

### Example 7

A 1-liter autoclave was charged with 100 parts of phthalic anhydride, 145 parts of urea, 0.5 part of ammonium molybdate, 17 parts of nickel chloride and 170 parts of Hisol P (alkylbenzene, supplied by Nippon Petrochemical Co., Ltd.), and the mixture was heated up to 200°C under an elevated pressure of 1.5 ~ 3.0 kg/cm²G and allowed to react to give a slurry of a nickel phthalocyanine crude. Then, the slurry was allowed to cool, and then, the compound G (shown in Table 1) was added to 17 parts of the slurry of copper phthalocyanine crude. The amount of the compound G was 4 % based on the nickel phthalocyanine crude. The mixture was charged into a vertical sand mill packed with 400 parts of zirconia beads having a diameter of 0.5 mm. Then, 32 parts of additional Hisol P was added, and the phthalocyanine crude was milled at 80°C for 2 hours. The resultant milled product and the milling medium were separated through two filters while washing them with methanol. The resultant cake was added to 300 parts of a 1 % sodium hydroxide aqueous solution, and the mixture was heated at 80°C for 30 minutes. Then, the mixture was filtered while fully washing the product with hot water until the pH of the filtrate became neutral. Further, the product was added to 300 parts of a 2% sulfuric acid aqueous solution, and the mixture was stirred under heat at 80°C for 30 minutes. The mixture was filtered while fully washing the product with hot water until the pH of the filtrate became neutral. Then, the product was dried to give a nickel phthalocyanine pigment. The so-obtained pigment had a clearer color and a higher tinting strength than the pigment obtained in Comparative Example 6.

**Table 4**

| Example | Specific surface area (m²/g) | Color tone (Clearness in color) | Tinting strength (%) |
|---|---|---|---|
| C. Ex. 1 | 55 | - | 100 |
| C. Ex. 2 | 8 | Poor | 25 |
| C. Ex. 3 | 53 | Equivalent | 99 |
| C. Ex. 4 | 58 | A littler Clearer | 103 |
| Ex. 1 | 67 | Clearer | 102 |
| Ex. 2 | 69 | Clearer | 105 |
| Ex. 3 | 77 | Remarkably clear | 110 |
| C. Ex. 5 | 53 | Equivalent | 100 |
| Ex. 4 | 66 | Clearer | 101 |
| Ex. 5 | 68 | Clearer | 104 |
| Ex. 6 | 76 | Clearer | 109 |
| Ex. = Example, CEx. = Comparative Example | | | |

**Table 5**

| Example | Specific surface area (m²/g) | Color tone (Clearness in color) | Tinting strength (%) |
|---|---|---|---|
| CEx. 6 | 54 | - | 100 |
| CEx. 7 | 10 | Poor | 23 |
| Ex. 7 | 66 | Clearer | 103 |
| Ex. = Example, CEx. = Comparative Example | | | |

According to the process of the present invention, a fine phthalocyanine pigment having an excellent hue and a large specific surface area can be obtained by removing and recovering the solvent with a spray type dryer after forming the synthesized phthalocyanine crude into a pigment without removing the solvent from a slurry of the synthesized phthalocyanine crude. The process of the present invention is therefore remarkably simple, efficient and economical as compared with a conventional process of synthesizing a phthalocyanine crude and forming the phthalocyanine crude into a pigment through complicated steps requiring a long period of time and a large amount of power.

The present invention can overcome the following problems of conventional methods.
(1) The organic solvent used for synthesizing a phthalocyanine crude is also used in the step of pigmentation, so that it is sufficient to remove and recover the organic solvent only once.
(2) The pigmentation is carried out in a slurry of a synthesized phthalocyanine crude, so that it is sufficient to carry out the purification and the drying once each, which steps are carried out twice in a conventional method, i.e., after the synthesis of a phthalocyanine crude and after the pigmentation.

The term MePc used in formulae (1) to (3) refers to a metal-free or metal-containing phthalocyanine residue. Thus Me may represent two hydrogen atoms or at least one metal selected from Al, Fe, Co, Ni, Cu and Zn. Pc is an unsubstituted phthalocyanine residue or a phthalocyanine residue substituted with one or more halogen atoms, for example from 1 to 12 halogen atoms. The halogen atom(s) are typically chlorine and/or bromine. MePc may therefore denote, CuPc, (Cl)₂-CuPc, (Cl)₁₂-CuPc, (Cl)₄(Br)₂-CuPc, NiPc, (Cl)₅(Br)₅-CuPc, (Cl)₁₀-CuPc, (Cl)₆(Br)₂-CuPc.

In formula (1) each of R¹, R², R³ and R⁴ is independently a hydrogen atom, an alkyl group, a substituted alkyl group, an aryl group, a substituted aryl group or a polyoxyalkylene group. Suitable alkyl or substituted alkyl groups have 1 to 30 carbon atoms, typically 6 to 30 carbon atoms such as 8 to 30 or 10 to 30 carbon atoms and suitably 8 to 20 carbon atoms. The alkyl groups may be straight chain or branched. Suitable substituents include phenyl, halogen, hydroxyl, carbonyl, carboxyl, ether, ester, acyl or primary, secondary or tertiary amino groups. The aryl groups are typically phenyl or substituted phenyl groups. The polyoxyalkylene groups generally have a degree of polymerization of 2 to 30, preferably 5 to 30. It is preferable that at least one, for example one or two of R₁, R₂, R₃ and R₄ is an alkyl group having at least 6, for example at least 8 or at least 10 carbon atoms or is a polyoxyalkylene group.

In formula (2) R⁵ and R⁶ together with the nitrogen atom to which they are attached may form a saturated or unsaturated ring. Typically the ring has 5 or 6 members. The ring may optionally contain O or S or a further nitrogen atom. Typical examples of these rings include N-morpholino and piperidyl.

In formula (3) the substituent A is typically NO₂ or a halogen, for example chlorine.

Throughout this specification, unless otherwise specified, the term "alkyl" refers to a substituted or unsubstituted alkyl group which may be straight chain or branched and comprises 1 to 30 carbon atoms, for example 1 to 10 carbon atoms, preferably 1 to 4 carbon atoms.

## Claims

1. A process for the production of a phthalocyanine pigment, which process comprises:
(a) reacting phthalic anhydride or a derivative thereof with urea or a derivative thereof in an organic solvent in the presence of a catalyst to produce a phthalocyanine crude;
(b) wet-milling a slurry of the phthalocyanine crude, without removing the organic solvent, in the presence of a particulate milling medium having a diameter of 0.2 to 1 mm, and
(c) removing the organic solvent, purifying and drying the milled product,
wherein any one of the phthalocyanine derivatives of the following general formulae (1) to (3) is added after step (a) but before step (b) or during step (b):
MePc (SO₃⁻⁺NR¹R²R³R⁴)ₙ (1)
wherein MePc is a metal-free or metal-containing phthalocyanine residue which is unsubstituted or substituted with halogen, each of R¹, R², R³ and R⁴ is independently a hydrogen atom, an alkyl group, a substituted alkyl group, an aryl group, a substituted aryl group or a polyoxyalkylene group and n is an integer of from 1 to 4;
MePc[X-Y-Z-N(R⁵)R⁶]ₖ (2)
wherein MePc is as defined above, X is a direct bond or a divalent binding group of a chemically rational combination consisting of 2 to 15 atoms selected from S, C, N, O and H atoms, Y is a direct bond, a -N(R⁷)- in which R⁷ is an alkyl group having 1 to 18 carbon atoms or Z-N(R⁵)R⁶, or -O-, Z is an alkylene group having 1 to 6 carbon atoms, each of R⁵ and R⁶ is independently an alkyl group having 1 to 18 carbon atoms or a substituted alkyl group having 1 to 18 carbon atoms, or R⁵ and R⁶ together with the nitrogen atom to which they are attached form a heterocyclic ring which optionally contains O, S or an additional N and is substituted or unsubstituted, and k is an integer of from 1 to 3; and 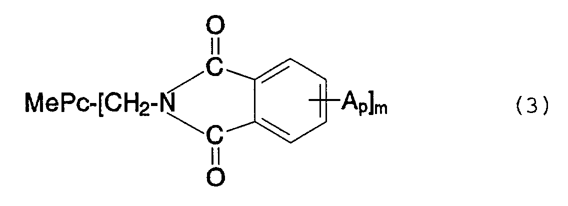 wherein MePc is as defined above, A is a halogen atom or a nitro, amino, sulfone, carboxyl or alkyl group, p is 0 or an integer of 1 to 4 and m is an integer of 1 to 4.

2. A process according to claim 1, wherein step (a) is carried out in the presence of a metal which can constitute central metal of the resulting phthalocyanine or in the presence of a compound of a said metal.

3. A process according to any one of the preceding claims, wherein the phthalocyanine derivative of formula (1), (2) or (3) is added in an amount of from 0.1 to 10 parts by weight per 100 parts by weight of the phthalocyanine crude.

4. A process according to any one of the preceding claims, wherein step (b) is carried out in the presence of an additional organic solvent.

5. A process according to any one of the preceding claims, wherein in step (b) the total weight of the organic solvent is 2 to 20 times the weight of the phthalocyanine crude.

6. A process according to any one of the preceding claims, wherein the organic solvent is an aromatic hydrocarbon.

7. A process according to any one of the preceding claims, wherein step (b) is carried out with a vibration mill, an attritor or a sand mill.

8. A process according to any one of the preceding claims, wherein step (b) is carried out by first milling the phthalocyanine crude in the presence of a particulate milling medium having a diameter of over 1 mm and then milling the phthalocyanine crude in the presence of a particulate milling medium having a diameter of 0.2 to 1 mm.

9. A process according to any one of the preceding claims, wherein step (b) is carried out at a temperature of from 50°C to 90°C.

10. A process according to any one of the preceding claims, wherein the organic solvent is removed with a spray type dryer.

11. A process for producing a coating composition, ink or colorant, which process comprises carrying out a process as claimed in any one of claims 1 to 10 and formulating a coating composition, ink or colorant which incorporates the resulting phthalocyanine pigment.

## Patentansprüche

1. Verfahren zur Herstellung eines Phthalocyanin-Pigments, umfassend:
(a) Umsetzen von Phthalsäureanhydrid oder einem Derivat davon mit Harnstoff oder einem Derivat davon in einem organischen Lösungsmittel in Gegenwart eines Katalysators zur Bildung eines Phthalocyanin-Rohguts;
(b) Nassmahlen einer Aufschlämmung des Phthalocyanin-Rohguts, ohne Entfernen des organischen Lösungsmittels, in Gegenwart eines teilchenförmigen Mahlmediums mit einem Durchmesser von 0,2 bis 1 mm, und
(c) Entfernen des organischen Lösungsmittels, Reinigen und Trocknen des gemahlenen Produkts,
wobei irgendeines der Phthalocyanin-Derivate der nachstehenden allgemeinen Formeln (1) bis (3) nach dem Schritt (a), aber vor dem Schritt (b), oder während des Schritts (b) hinzugefügt wird:
MePc(SO₃⁻⁺NR¹R²R³R⁴)ₙ (1)
worin MePc ein metallfreier oder metallhaltiger Phthalocyanin-Rückstand ist, welcher unsubstituiert oder mit Halogen substituiert ist, jedes von R¹, R², R³ und R⁴ unabhängig ein Wasserstoffatom, eine Alkylgruppe, eine substituierte Alkylgruppe, eine Arylgruppe, eine substituierte Arylgruppe oder eine Polyoxyalkylengruppe ist und n eine ganze Zahl von 1 bis 4 ist;
MePc[X-Y-Z-N(R⁵)R⁶]ₖ (2)
worin MePc wie obenstehend definiert ist, X eine direkte Bindung oder eine zweiwertige Bindungsgruppe einer chemisch rationalen Kombination bestehend aus 2 bis 15 Atomen, gewählt aus S-, C-, N-, O- und H-Atomen, ist, Y eine direkte Bindung, eine -N(R⁷)-, in welcher R⁷ eine Alkylgruppe mit 1 bis 18 Kohlenstoffatomen oder Z-N(R⁵)R⁶ ist, oder -O- ist, Z eine Alkylengruppe mit 1 bis 6 Kohlenstoffatomen ist, jedes von R⁵ und R⁶ unabhängig eine Alkylgruppe mit 1 bis 18 Kohlenstoffatomen oder eine substituierte Alkylgruppe mit 1 bis 18 Kohlenstoffatomen ist, oder R⁵ und R⁶ zusammen mit dem Stickstoffatom, an welches sie gebunden sind, einen heterocyclischen Ring bilden, welcher wahlweise O, S oder ein zusätzliches N enthält und substituiert oder unsubstituiert ist, und k eine ganze Zahl von 1 bis 3 ist; und 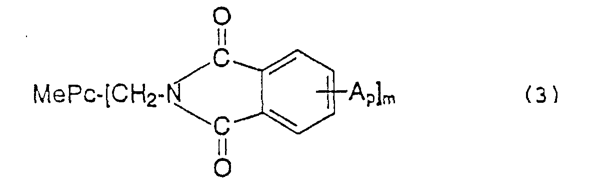 worin MePc wie obenstehend definiert ist, A ein Halogenatom oder eine Nitro-, Amino-, Sulfon-, Carboxyl- oder Alkylgruppe ist, p 0 oder eine ganze Zahl von 1 bis 4 ist und m eine ganze Zahl von 1 bis 4 ist.

2. Verfahren nach Anspruch 1, wobei der Schritt (a) in Gegenwart eines Metalls, welches das zentrale Metall des resultierenden Phthalocyanins bilden kann, oder in Gegenwart einer Verbindung eines der genannten Metalle durchgeführt wird.

3. Verfahren nach mindestens einem der vorhergehenden Ansprüche, wobei das Phthalocyanin-Derivat der Formel (1), (2) oder (3) in einer Menge von 0,1 bis 10 Gewichtsteilen pro 100 Gewichtsteile des Phthalocyanin-Rohguts hinzugefügt wird.

4. Verfahren nach mindestens einem der vorhergehenden Ansprüche, wobei der Schritt (b) in Gegenwart eines zusätzlichen organischen Lösungsmittels durchgeführt wird.

5. Verfahren nach mindestens einem der vorhergehenden Ansprüche, wobei in Schritt (b) das Gesamtgewicht des organischen Lösungsmittels das 2- bis 20-fache des Gewichts des Phthalocyanin-Rohguts ist.

6. Verfahren nach mindestens einem der vorhergehenden Ansprüche, wobei das organische Lösungsmittel ein aromatischer Kohlenwasserstoff ist.

7. Verfahren nach mindestens einem der vorhergehenden Ansprüche, wobei der Schritt (b) mit einer Vibrationsmühle, einem Attritor oder einer Sandmühle durchgeführt wird.

8. Verfahren nach mindestens einem der vorhergehenden Ansprüche, wobei der Schritt (b) zunächst durch Mahlen des Phthalocyanin-Rohguts in Gegenwart eines teilchenförmigen Mahlmediums mit einem Durchmesser von über 1 mm und anschliessendes Mahlen des Phthalocyanin-Rohguts in Gegenwart eines teilchenförmigen Mahlmediums mit einem Durchmesser von 0,2 bis 1 mm durchgeführt wird.

9. Verfahren nach mindestens einem der vorhergehenden Ansprüche, wobei der Schritt (b) bei einer Temperatur von 50°C bis 90°C durchgeführt wird.

10. Verfahren nach mindestens einem der vorhergehenden Ansprüche, wobei das organische Lösungsmittel mit einem Trockner vom Sprüh-Typ entfernt wird.

11. Verfahren zur Herstellung einer Beschichtungszusammensetzung, von Druckfarbe oder Farbmittel, wobei das Verfahren die Durchführung eines in mindestens einem der Ansprüche 1 bis 10 beanspruchten Verfahrens und die Formulierung einer Beschichtungszusammensetzung, von Druckfarbe oder Farbmittel umfasst, in welches das resultierende Phthalocyanin-Pigment eingebracht ist.

## Revendications

1. Procédé de préparation d'un pigment phtalocyanine, ce procédé comprenant :
(a) la mise en réaction d'anhydride phtalique ou d'un dérivé de celui-ci avec de l'urée ou un dérivé de celle-ci dans un solvant organique en présence d'un catalyseur pour produire une phtalocyanine brute ;
(b) le broyage par voie humide d'une suspension de la phtalocyanine brute, sans séparer le solvant organique, en présence d'un milieu de broyage en particules ayant un diamètre de 0,2 à 1 mm, et
(c) la séparation du solvant organique, la purification et le séchage du produit broyé,
dans lequel on ajoute l'un quelconque des dérivés de phtalocyanine répondant aux formules générales (1) à (3) suivantes après l'étape (a) mais avant l'étape (b) ou pendant l'étape (b) :
MePc(SO₃⁻⁺NR¹R²R³R⁴)ₙ (1)
dans laquelle MePc est un résidu phtalocyanine exempt de métal ou contenant un métal, qui est non substitué ou substitué par un halogène, chacun de R¹, R², R³ et R⁴ est indépendamment un atome d'hydrogène, un groupe alkyle, un groupe alkyle substitué, un groupe aryle, un groupe aryle substitué ou un groupe polyoxyalkylène, et n est un nombre entier de 1 à 4 ;
MePc[X-Y-Z-N(R⁵)R⁶]ₖ (2)
dans laquelle MePc est comme défini ci-dessus, X est une liaison directe ou un groupe de liaison divalent formé d'une combinaison chimiquement rationnelle constituée de 2 à 15 atomes choisis parmi des atomes de S, C, N, O et H, Y est une liaison directe, un groupe -N(R⁷)- dans lequel R⁷ est un groupe alkyle ayant de 1 à 18 atomes de carbone, ou Z-N(R⁵)R⁶ ou -O-, Z est un groupe alkylène ayant de 1 à 6 atomes de carbone, chacun de R⁵ et R⁶ est indépendamment un groupe alkyle ayant de 1 à 18 atomes de carbone ou un groupe alkyle substitué ayant de 1 à 18 atomes de carbone, ou R⁵ et R⁶ conjointement avec l'atome d'azote auquel ils sont liés forment un noyau hétérocyclique qui contient éventuellement O, S ou un N supplémentaire et est substitué ou non substitué, et k est un nombre entier de 1 à 3 ; et 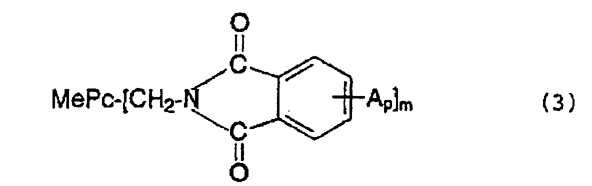 où MePc est comme défini ci-dessus, A est un atome d'halogène ou un groupe nitro, amino, sulfone, carboxyle ou alkyle, p est 0 ou un nombre entier de 1 à 4, et m est un nombre entier de 1 à 4.

2. Procédé selon la revendication 1, dans lequel on effectue l'étape (a) en présence d'un métal qui peut constituer le métal central de la phtalocyanine résultante ou en présence d'un composé dudit métal.

3. Procédé selon l'une quelconque des revendications précédentes, dans lequel on ajoute le dérivé de phtalocyanine de formule (1), (2) ou (3) en une quantité de 0,1 à 10 parties en poids pour 100 parties en poids de la phtalocyanine brute.

4. Procédé selon l'une quelconque des revendications précédentes, dans lequel on effectue l'étape (b) en présence d'un solvant organique supplémentaire.

5. Procédé selon l'une quelconque des revendications précédentes, dans lequel, dans l'étape (b), le poids total du solvant organique est de 2 à 20 fois le poids de la phtalocyanine brute.

6. Procédé selon l'une quelconque des revendications précédentes, dans lequel le solvant organique est un hydrocarbure aromatique.

7. Procédé selon l'une quelconque des revendications précédentes, dans lequel on effectue l'étape (b) avec un broyeur à vibrations, un triturateur ou un broyeur à sable.

8. Procédé selon l'une quelconque des revendications précédentes, dans lequel on effectue l'étape (b) d'abord en broyant la phtalocyanine brute en présence d'un milieu de broyage en particules ayant un diamètre supérieur à 1 mm et ensuite en broyant la phtalocyanine brute en présence d'un milieu de broyage en particules ayant un diamètre de 0,2 à 1 mm.

9. Procédé selon l'une quelconque des revendications précédentes, dans lequel on effectue l'étape (b) à une température de 50°C à 90°C.

10. Procédé selon l'une quelconque des revendications précédentes, dans lequel on sépare le solvant organique avec un séchoir de type à pulvérisation.

11. Procédé de préparation d'une composition d'enduction, d'une encre ou d'un colorant, ledit procédé comprenant la mise en oeuvre d'un procédé selon l'une quelconque des revendications 1 à 10 et la formulation d'une composition d'enduction, d'une encre ou d'un colorant qui incorpore le pigment phtalocyanine résultant.
